# EUROPÄISCHE PATENTSCHRIFT

(11) **EP 2 982 874 B1**
(45) Veröffentlichungstag und Bekanntmachung des Hinweises auf die Patenterteilung: **06.10.2021**
(21) Anmeldenummer: 15179810.5
(22) Anmeldetag: 05.08.2015
(51) Int. Cl.: F16B 33/00, F16B 37/00, F16B 5/02

(54) **SCHRAUBDOM ZUM BEFESTIGEN EINES BAUTEILS**
SCREW DOME FOR ATTACHING A COMPONENT
BOSSAGE POUR VIS DESTINE A LA FIXATION D'UN COMPOSANT

(30) Priorität: 05.08.2014 DE 202014103640 U
(43) Veröffentlichungstag der Anmeldung: 10.02.2016
(73) Patentinhaber: SMP Deutschland GmbH, 79268 Bötzingen (DE)
(72) Erfinder: Löffler, Mike, 79194 Gundelfingen (DE); Löffler, Markus, 79261 Gutach (DE); Bleile, Claus, 79227 Schallstadt (DE)
(74) Vertreter: Westphal, Mussgnug & Partner Patentanwälte mbB

(56) Entgegenhaltungen:
- EP-A1- 0 302 026
- DD-A1- 280 649
- DE-A1- 1 500 653
- DE-A1- 2 016 234
- DE-A1- 4 433 588
- DE-U1- 29 520 591
- FR-A1- 2 730 684
- US-A- 3 326 260
- US-A- 4 260 278
- US-A1- 2013 330 149
- None

## Beschreibung

Die vorliegende Erfindung betrifft einen Schraubdom zum Befestigen eines Bauteils, wobei der Schraubdom ganz oder teilweise aus einem elastisch oder plastisch verformbaren Material besteht und der Schraubdom eine Längsachse und eine Bohrung aufweist, entlang welcher eine Schraube mit einem selbstschneidenden oder selbstfurchenden Gewinde in den Schraubdom einschraubbar ist.

Schrauben, die ein selbstschneidendes oder selbstfurchendes Gewinde aufweisen, werden häufig auch als selbstschneidende oder selbstfurchende Schrauben bezeichnet, die im Grunde genauso aufgebaut sind wie jede andere Schraube auch. Vom Kern der Schraube bis zum Gewindeinnendurchmesser ist die Schraube massiv. Radial nach außen beginnt nun das Gewinde, welches beim Gewindeaußendurchmesser endet. Im Wesentlichen weichen die Steigung des Gewindes und der Querschnitt der Gewindeflanken deutlich von anderen Schrauben ab.

Derartige Schrauben werden in Bohrungen eingeschraubt, die kein zum Außengewinde der Schraube passendes Innengewinde, sondern überhaupt kein Gewinde aufweisen. In einigen Fällen ist es auch möglich, die Schrauben direkt in das Bauteil einzuschrauben, ohne vorbohren zu müssen. Die Schrauben mit einem selbstschneidenden oder selbstfurchenden Gewinde verdrängen einen Teil des Materials des Bauteils, in welches sie eingeschraubt werden, radial nach außen und schneiden sich in das Material ein. Durch die Verdichtung des Materials in der Umgebung der Schraube können sehr feste Schraubverbindungen bereitgestellt werden, mit denen hohe Kräfte übertragen werden können.

Damit eine Schraubverbindung, mit welcher zwei oder mehrere Bauteile miteinander verbunden werden, die zu erwartenden Kräfte sicher aufnehmen kann, muss sie eine bestimmte Mindestlänge aufweisen, die aber bei flachen Bauteilen oder bei flachen Abschnitten der betreffenden Bauteile häufig nicht erreicht wird. In diesem Fall werden an den Stellen, wo die Schraubverbindung angeordnet werden soll, Schraubdome vorgesehen. Schraubdome sind im Wesentlichen zylinder- oder konusförmige Vorsprünge, in welche die zum Bereitstellen der Verbindung verwendeten Schrauben eingeschraubt werden können. In den meisten Fällen weisen Schraubdome Bohrungen auf, in welche die Schrauben eingeschraubt werden. Mithilfe der Schraubdome kann die notwendige Mindestlänge für die Schraubverbindung bereitgestellt werden, ohne das gesamte Bauteil mit der entsprechenden Wandstärke ausstatten zu müssen, was material- und gewichtssparend ist.

Nicht jedes Material ist für die Verwendung von Schrauben mit selbstschneidenden oder selbstfurchenden Gewinden geeignet. Damit die Schraube die notwendige Menge des Materials verdrängen kann, muss das Material eine gewisse Elastizität oder Plastizität aufweisen. Holz ist ein gutes Beispiel für ein Material, bei dem nahezu ausschließlich Schrauben mit selbstschneidenden oder selbstfurchenden Gewinden eingesetzt werden. Die meisten Metalle eignen sich hingegen nicht für den Einsatz derartiger Schrauben. Aufgrund der großen Vielfalt von Kunststoffen mit ganz unterschiedlicher Elastizität und Plastizität kommt es für die Frage, ob Schrauben mit selbstschneidendem Gewinde verwendet werden können oder nicht, auf den betreffenden Kunststoff und seine Eigenschaften an. Bei einigen Kunststoffen kann beim Einschrauben die Fließgrenze erreicht oder überschritten werden, was zu nahezu unlösbaren Verbindungen führt.

Aufgrund der hohen radialen Kräfte, die beim Einschrauben auftreten, neigen Schraubdome jedoch dazu, beim Einschraubvorgang aufzuplatzen. Bereits kleine Abweichungen vom Sollzustand, beispielsweise beim Durchmesser der Bohrung oder im Anzugsdrehmoment, können zum Aufplatzen führen, weshalb die Schraubdome häufig deutlich überdimensioniert werden. Allerdings ist es nicht immer möglich, die Schraubdome beliebig zu dimensionieren. Insbesondere bei Änderungen der zu verbindenden Bauteile bereitet die Anpassung der Schraubdome viel Aufwand.

Die DE 103 50 887 A1 zeigt einen Schraubdom, der einen in etwa S-förmigen Querschnitt aufweist, so dass die Bohrung in einigen Abschnitten freiliegt. Über diese Abschnitte kann Material, welches beim Einschrauben aufgeworfen wird, abgeführt werden, wodurch die radial auf den Schraubdom wirkenden Kräfte reduziert werden. Zudem treten in diesen Abschnitten keine radialen Kräfte auf, so dass die Neigung des Aufplatzens des Schraubdoms verringert wird. Nachteilig hieran ist jedoch, dass die axial übertragbaren Kräfte und Drehmomente aufgrund des S-förmigen Querschnitts gering sind. Zudem ist die Fertigung eines derartigen Schraubdoms aufgrund der Hinterschneidungen aufwendig.

Die FR 2 730 684 A1 offenbart ein erstes Bauteil aus Kunststoff zum Befestigen eines zweiten Bauteils, wobei das erste Bauteil eine Bohrung, in der eine geschwindeschneidende Schraube eingeschraubt werden kann, sowie eine Vielfalt von radialen Nuten, die sich an die Bohrung anschließen, aufweist. Die Nuten werden durch das Gewinde der Schraube nicht beansprucht.

Die US 4 260 278 A und die DE 295 20 591 U1 offenbaren jeweils eine Befestigungsanordnung mit zwei miteinander zu verbindenden Bauteilen, wobei die Verbindung durch das Einschrauben in einem Schraubdom erfolgt. Der Schraubdom ist einteilig mit einem der Bauteile und nicht als gesondertes Teil gefertigt.

Die DE 15 00 653 A1 offenbart eine Schraubverbindung mit einem Teil und einem Schraubbolzen und die US 3 326 260 A eine selbstklemmende, selbstschneidende Mutter.

Die US 2013/330149 A1 zeigt einen Schraubdom aus Kunststoff mit einer Bohrung zum Schrauben einer selbstfurchenden Schraube, wobei die Bohrung vieleckförmig ausgebildet ist. Das beim Schrauben aufgeworfene Material wird durch die Ecken der Bohrung aufgenommen.

Weitere Schraubverbindungen sind in der DE 295 20 591 U1, der DD 280 649 A1, der EP 0 302 026 A1, der DE 44 22 588 A1 und der DE 20 16 234 A1 offenbart.

Aufgabe der vorliegenden Erfindung ist es daher, einen Schraubdom der eingangs genannten Art anzugeben, mit der bzw. mit dem die Gefahr eines Aufplatzens reduziert wird, die bzw. der aber dennoch leicht zu fertigen ist und der hohe axial wirkende Kräfte sowie Drehmomente sicher übertragen kann. Gelöst wird die Aufgabe durch einen Schraubdom nach Anspruch 1.

Der erfindungsgemäße Schraubdom umfasst mehrere Hohlräume, die sich radial nach außen an die Bohrung anschließen und radial zur Längsachse nach außen geschlossen sind. Die Hohlräume weisen eine Anzahl von Querschnitten auf, die entlang der Längsachse abrupt oder allmählich ineinander übergehen oder beabstandet voneinander angeordnet sind. Die Hohlräume weisen bezogen auf eine senkrecht zur Längsachs verlaufende Ebene einen elliptischen Querschnitt auf.

Dadurch, dass die Hohlräume zumindest teilweise im Gewinderaum verlaufen, kann von der Schraube aufgeworfenes Material in die Hohlräume gelangen und dort abgelegt werden, wodurch eine Verringerung der radial auf den Schraubdom wirkenden Kräfte erreicht wird.

Die Hohlräume können den Schraubdom komplett wie eine Durchgangsbohrung oder nur teilweise wie eine Sacklochbohrung durchdringen. Dadurch, dass die Hohlräume radial nach außen im Gegensatz zu dem in der DE 103 50 887 A1 gezeigten Schraubdom geschlossen sind, können insbesondere in axiale Richtung deutlich höhere Kräfte übertragen werden. Dennoch wird die Neigung des Schraubdoms zum Aufplatzen spürbar verringert, da in den betreffenden Fällen das beim Einschrauben aufgeworfene Material in die Hohlräume hineingeschoben werden kann, so dass hierdurch die auftretenden radialen Kräfte reduziert werden. Die auftretenden radialen Kräfte werden durch die Hohlräume selbst bereits reduziert. Der erfindungsgemäße Schraubdom weist folglich eine deutlich verringerte Neigung zum unkontrollierten Aufplatzen auf, ist dennoch in der Lage, hohe axiale Kräfte zu übertragen. Da der Schraubdom eine ununterbrochene Außenfläche aufweist, befindet sich viel Material am radialen Ende des Schraubdoms, weshalb auch große Drehmomente übertragen werden können. Das Maß der Überdimensionierung kann spürbar verringert werden, weshalb Material eingespart und eine einmal gewählte Auslegung des Schaubdoms auch bei Änderungen der zu verbindenden Bauteile beibehalten werden kann.

Es kann eine den Schraubdom ganz oder teilweise durchdringende Bohrung vorgesehen sein, wobei sich die Hohlräume radial auswärts an die Bohrung anschließen. Je nach Elastizität oder Plastizität des Materials und Durchmesser der Schraube ist es ab einem bestimmten Punkt nicht mehr möglich, die Schraube direkt in den Schraubdom einzuschrauben, ohne zuvor eine Bohrung zu fertigen. Durch die Bohrung wird ein bestimmtes Volumen von Material aus dem Schraubdom entfernt, was bereits zu einer deutlichen Reduzierung der beim Einschrauben radial auf den Schraubdom wirkenden Kräfte führt. Zudem bewirkt die Bohrung eine Führung der Schraube, so dass ihre Position im Schraubdom genauer festgelegt werden kann. Die Bohrung selbst kann aber auch vorteilhaft für die Fertigung der Hohlräume verwendet werden, beispielsweise dadurch, dass ein Fräskopf in die Bohrung eingeführt wird, mit dem die Hohlräume in das Material des Schraubdoms gefräst werden. Die Bohrung kann den Schraubdom nur teilweise durchdringen, also als Sacklochbohrung ausgestaltet ist. Die Länge der Bohrung entspricht dabei vorzugsweise in etwa der Länge des einschraubbaren Teils der Schraube, so dass die Bohrung nicht länger ist als notwendig. Hierdurch ist sichergestellt, dass der Schraubdom so wenig wie möglich durch die Bohrung geschwächt wird, wodurch er hohe Kräfte und Drehmomente aufnehmen kann. Beinhaltet die Gestaltung der Hohlräume jedoch Hinterschneidungen, so kann es aus fertigungstechnischen Gründen notwendig sein, die Bohrung als Durchgangsbohrung auszuführen. Somit können die Werkzeuge von beiden Enden der Bohrung in den Schraubdom eingebracht werden. Moderne Fertigungsverfahren wie der 3D-Druck ermöglichen die Fertigung von Hinterschneidungen auch bei Sacklochbohrungen.

Die maximale radiale Erstreckung der Hohlräume kann größer sein als der Gewindeaußendurchmesser. Mit anderen Worten reichen die Hohlräume radial gesehen über den Gewinderaum hinaus, so dass die Hohlräume viel Platz bereitstellen, in welche das aufgeworfene Material beim Einschrauben abgelegt werden kann. Die Neigung des Aufplatzens wird besonders wirksam reduziert. Es hat sich herausgestellt, dass sich in dieser Ausführungsform die radialen Kräfte auf den Schraubdom und folglich seine Neigung zum Aufplatzen spürbar reduzieren lassen, ohne dass es zu einer wesentlichen Reduzierung der mit der Schraubverbindung axial übertragbaren Kräfte kommt.

Alternativ kann die maximale radiale Erstreckung der Hohlräume größer als der Gewindeinnendurchmesser und kleiner als der Gewindeaußendurchmesser sein. Bei der überwiegenden Anzahl der handelsüblichen Schrauben entspricht der Gewindeinnendurchmesser dem Kerndurchmesser des massiven Gewindekerns. In dieser Ausgestaltung erstreckt sich der Gewindekern abschnittsweise radial weiter nach außen als der Hohlraum. In diesen Abschnitten wird über die gesamte Länge des Gewindekerns das Material des Schraubdoms nach außen gedrückt. Insbesondere in dem Fall, dass für das Material des Schraubdoms Kunststoff verwendet wird, kann dort, wo das Material nach außen gedrückt wird, eine so hohe Flächenpressung erzeugt werden, dass der Kunststoff lokal fließt. Hierdurch lässt sich eine sehr feste Verbindung bereitstellen, mit welcher sehr hohe axiale Kräfte übertragen werden können. Da aber der Hohlraum gleichzeitig auch Abschnitte aufweist, in denen der Gewindekern nicht mit dem Material des Schraubdoms in Berührung kommt und in denen vom Gewinde aufgeworfenes Material abgelegt werden kann, kann das Anzugsdrehmoment soweit begrenzt werden, dass die Gefahr des Platzens des Schraubdoms auf ein unkritisches Maß reduziert werden.

Je nach Wahl des Verhältnisses zwischen den Abmessungen des Schraubdoms und der verwendeten Schrauben und insbesondere der maximalen radialen Erstreckung der Hohlräume und des Gewindeinnendurchmessers und des Gewindeaußendurchmessers können die oben beschriebenen technischen Effekte verstärkt oder abgeschwächt werden. Beispielsweise ist es möglich, bei einem gegebenen Schraubdom mit der Verwendung einer Schraube mit einem größeren Gewindeinnendurchmesser und Gewindeaußendurchmesser ein lokales Fließen in den Bereichen zu bewirken, an denen der Gewindekern mit dem Material des Schraubdoms in Berührung kommt. Diese Vorgehensweise bietet sich insbesondere dann an, wenn sehr hohe axiale Kräfte übertragen werden müssen und ein Lockern im Betrieb der betreffenden Bauteile weitgehend ausgeschlossen werden soll. Wird eine Schraube mit kleinerem Gewindeinnen- und Gewindeaußendurchmesser verwendet, sinken die axial übertragbaren Kräfte im Vergleich zur Verwendung von Schrauben mit größerem Gewindeinnen- und Gewindeaußendurchmesser, jedoch lässt sich die Verbindung der betreffenden Bauteile leichter lösen, was sich dann anbietet, wenn zu erwarten ist, dass die Bauteile ausgetauscht werden müssen. In beiden Fällen wird aber das Anzugsdrehmoment mit den Hohlräumen auf ein unkritisches Maß reduziert, so dass der Schraubdom bei der Befestigung der betreffenden Bauteile miteinander nicht abplatzt. Ein gegebener Schaubdom kann folglich je nach Anwendungsfall für Schrauben unterschiedlicher Größe verwendet werden. Hierin liegt ein wesentlicher Unterschied zu Muttern, die im ursprünglichen Zustand eine glatte Oberfläche mit einem kreisförmigen Querschnitt aufweisen, die von einer Schicht aus plastisch und/oder elastisch verformbarem Material gebildet wird. Die Mutter wird auf eine Gewindeschraube oder eine Gewindestange aufgeschraubt, wodurch ein Gewinde in die glatte Oberfläche eingeschnitten wird. Insbesondere aufgrund von Normungsvorschriften und Festigkeitsanforderungen ist die Größe einer Mutter auf die Größe einer Gewindeschraube oder einer Gewindestange abgestimmt, so dass für eine Mutter mit gegebener Größe nur eine Gewindeschraube oder Gewindestange mit der passenden Größe verwendet werden kann. Daher ist die oben beschriebene Flexibilität in der Wahl der Größe der verwendeten Schrauben und die damit verbundene Möglichkeit, den ein oder anderen technischen Effekt zu verstärken oder abzuschwächen, bei Muttern im Gegensatz zum erfindungsgemäßen Schraubdom nicht gegeben.

Erfindungsgemäß weisen die Hohlräume bezogen auf eine senkrecht zur Längsachse verlaufende Ebene eine Anzahl von Querschnitten auf, die entlang abrupt oder allmählich ineinander übergehen oder beabstandet voneinander angeordnet sind. In dieser Ausführungsform können Änderungen der Eigenschaften der Schraube und/oder des Schraubdoms entlang der Längsachse berücksichtigt werden. Dies gilt beispielsweise für Schrauben mit konischem Gewinde oder für Schraubdome mit einer konischen Form.

Die Erfindung wird im Folgenden anhand von bevorzugten Ausführungsbeispielen unter Bezugnahme auf die anhängenden Zeichnungen im Detail erläutert. Es zeigen
- Figur 1a): ein erstes Ausführungsbeispiel eines aus dem Stand der Technik bekannten Schraubdoms anhand einer Schnittdarstellung, an dem ein Bauteil mittels einer Schraube mit einem selbstschneidendem oder selbstfurchendem Gewinde befestigt ist,
- Figur 1b): einen Querschnitt durch den in Figur 1a) dargestellten Schraubdom entlang der in Figur 1a) definierten Ebene A-A,
- Figur 2a): ein Ausführungsbeispiel eines erfindungsgemäßen Schraubdoms anhand einer Schnittdarstellung, an dem ein Bauteil mittels einer Schraube mit einem selbstschneidendem oder selbstfurchendem Gewinde befestigt ist,
- Figur 2b): einen Querschnitt durch den in Figur 2a) dargestellten Schraubdom entlang der in Figur 2a) definierten Ebene B-B,
- Figur 3: einen Querschnitt durch ein bekanntes drittes Ausführungsbeispiel eines Schraubdoms, wobei die Schnittebene wie in Figur 1a) gewählt ist,
- Figur 4: einen Querschnitt durch ein bekanntes viertes Ausführungsbeispiel eines Schraubdoms, wobei die Schnittebene wie in Figur 1a) gewählt ist,
- Figur 5: einen Querschnitt durch ein bekanntes fünftes Ausführungsbeispiel eines Schraubdoms, wobei die Schnittebene wie in Figur 1a) gewählt ist,
- Figur 6: einen Querschnitt durch ein bekanntes sechstes Ausführungsbeispiel eines Schraubdoms, wobei die Schnittebene wie in Figur 1a) gewählt ist,
- Figur 7: einen Querschnitt durch ein bekanntes siebtes Ausführungsbeispiel eines Schraubdoms, wobei die Schnittebene wie in Figur 1a) gewählt ist,
- Figur 8: einen Querschnitt durch ein bekanntes achtes Ausführungsbeispiel eines Schraubdoms, wobei die Schnittebene wie in Figur 1a) gewählt ist,
- Figur 9: einen Querschnitt durch ein bekanntes neuntes Ausführungsbeispiel eines Schraubdoms, wobei die Schnittebene wie in Figur 1a) gewählt ist,
- Figur 10a): einen Querschnitt durch ein bekanntes zehntes Ausführungsbeispiel eines Schraubdoms, wobei die Schnittebene wie in Figur 1a) gewählt ist, wobei in den Schraubdom jeweils eine Schraube mit einem selbstschneidenden oder selbstfurchenden Gewinde eingeschraubt ist,
- Figur 10b): das in Figur 10a) dargestellte zehnte Ausführungsbeispiel des Schraubdoms, wobei in diesem Fall keine Schraube in den Schraubdom eingeschraubt ist, und

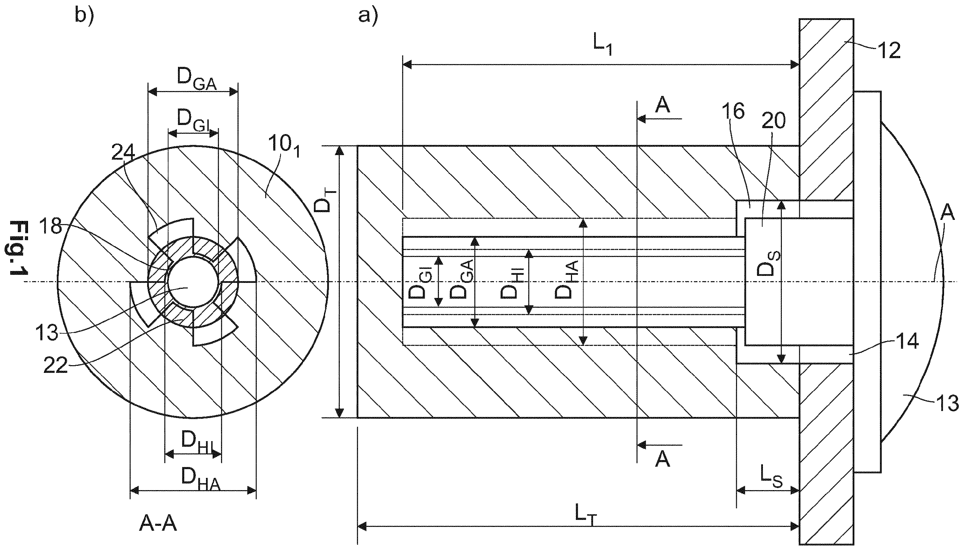

In Figur 1a) ist ein erstes Ausführungsbeispiel eines Schraubdoms 10₁ anhand einer Schnittdarstellung gezeigt. Der Schraubdom 10₁ weist eine im Wesentlichen zylinderförmige Gestaltung mit einer Längsachse A, einer Gesamtlänge L_{T} und einem Gesamtdurchmesser D_{T} auf. Die Gesamtlänge L_{T} beträgt üblicherweise in etwa zwischen 15 und 30 mm, wohingegen der Gesamtdurchmesser D_{T} in etwa zwischen 10 und 20 mm beträgt.

Ein Bauteil 12 ist mittels einer Schraube 13 mit einem selbstschneidenden oder selbstfurchenden Gewinde am Schraubdom 10₁ befestigt, wozu das Bauteil 12 eine Öffnung 14 aufweist, durch welche die Schraube 13 durchgesteckt ist. Der Schraubdom 10₁ weist eine Senkung 16 mit einer Länge Ls und einem Durchmesser Dₛ auf, wobei die Länge Lₛ üblicherweise zwischen 2 und 5 mm und der Durchmesser Dₛ zwischen 4 und 8 mm betragen. Von der Senkung 16 aus erstreckt sich eine Bohrung 18 entlang einer Längsachse A des Schraubdoms 10₁. Aus Darstellungsgründen ist der Verlauf der Bohrung 18 nur mit gestrichelten Linien angedeutet. Man erkennt, dass die Bohrung 18 als eine Sacklochbohrung ausgestaltet ist und den Schraubdom 10₁ nicht vollständig durchdringt. Die Ausgestaltung der Bohrung als Durchgangsbohrung ist aber ebenfalls denkbar.

Die verwendete Schraube 13 weist einen Bund 20 auf, der in die Senkung 16 einbringbar ist. Weiterhin weist die Schraube 13 einen Gewinderaum 22 (vgl. Figur 1b)) auf, der vom nicht näher dargestellten Gewinde eingenommen wird, welches unmittelbar am Bund 20 beginnt. Der Gewinderaum 22 erstreckt sich von einem Gewindeinnendurchmesser D_{GI} bis zu einem Gewindeaußendurchmesser D_{GA}. Der Gewindeinnendurchmesser D_{GI} entspricht in diesem Fall auch dem Kerndurchmesser der Schraube 13.

Wie insbesondere aus Figur 1b) zu erkennen, schließen sich insgesamt vier Hohlräume 24 radial nach außen der Bohrung 18 an, die bezogen auf die in Figur 1b) gewählte Darstellungsebene, die senkrecht zur Längsachse A verläuft, einen kreissektorförmigen Querschnitt aufweisen und sich von der Senkung 16 aus durchgehend bis zum Grund der Bohrung 18 erstrecken. In Figur 1a) sind die Verläufe der Hohlräume 24 aus Darstellungsgründen nur mit gestrichelten Linien angedeutet. In diesem Fall lässt sich eine minimale radiale Erstreckung D_{HI} für die Hohlräume 24 definieren. Da sich die Hohlräume 24 radial nach außen der Bohrung 18 anschließen, entspricht die minimale radiale Erstreckung D_{HI} dem Durchmesser der Bohrung 18. Der Durchmesser der Bohrung 18 ist dabei etwas größer als der Gewindeinnendurchmesser D_{GI} bzw. der Kerndurchmesser der Schraube 13. Weiterhin weisen die Hohlräume 24 eine maximale radiale Erstreckung D_{HA} auf. Man erkennt, dass die maximale radiale Erstreckung D_{HA} größer ist als der Gewindeaußendurchmesser D_{GA}. Typische Maße für die minimale radiale Erstreckung D_{HI} sind zwischen 2 und 4 mm und für die maximale radiale Erstreckung D_{HA} zwischen 4 und 6 mm.

Der Schraubdom 10₁ besteht beispielsweise aus einem elastisch oder plastisch verformbaren Kunststoff. Je nach verwendetem Fertigungsverfahren können der Bund 20, die Bohrung 18 und die Hohlräume 24 bereits bei der Formgebung des zylindrischen Grundkörpers des Schraubdoms 10₁ bereitgestellt werden. Alternativ können der Bund 20, die Bohrung 18 und die Hohlräume 24 durch Bohren und Fräsen aus einem massiven zylindrischen Grundkörper gefertigt werden. Ein Gewinde ist aber nicht vorgesehen.

In diesem Ausführungsbeispiel schließen sich die Hohlräume 24 der Bohrung 18 radial nach außen an und bilden mit der Bohrung 18 einen zusammenhängenden Raum. Zusammen mit der Bohrung 18 durchdringen folglich die Hohlräume 24 segmentweise den Gewinderaum 22. In den Abschnitten, wo der Gewinderaum 22 nicht von den Hohlräumen durchdrungen wird, kann sich das Gewinde in den Schraubdom 10₁ schneiden.

Zum Befestigen des Bauteils mit dem Schraubdom 10₁ wird die Schraube 13 in die Bohrung 18 eingebracht und durch Drehen angezogen, wobei sich die Schraube 13 im Gewinderaum 22 in das Material des Schraubdoms 10₁ einschneidet. Hierdurch wird Material im Schraubdom 10₁ verdichtet und aufgeworfen. Ein Teil des aufgeworfenen Materials wird vom Gewinde in die Hohlräume 24 gefördert und dort abgelegt. Da nun weniger Material verdichtet werden muss, um Platz für die Schraube 13 zu schaffen, werden die auf den Schraubdom 10₁ wirkenden radialen Kräfte und seine Neigung zum Aufplatzen reduziert.

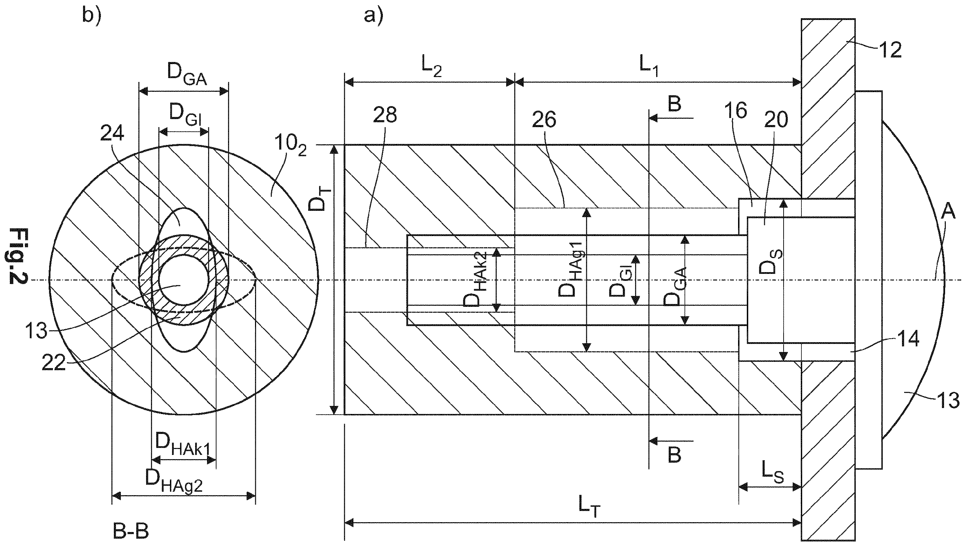

In den Figuren 2a) und 2b) ist ein Ausführungsbeispiel des erfindungsgemäßen Schraubdoms 10₂ gezeigt. In diesem Fall weisen die Hohlräume 24 einen elliptischen Querschnitt auf. In diesem Fall ist der elliptische Querschnitt immer größer der Durchmesser der Bohrung 18, so dass die Bohrung 18 vollständig vom Hohlraum 24 verdrängt wird. Infolge dessen beträgt die minimale radiale Erstreckung D_{HI} des Hohlraums 24 null. Aufgrund des elliptischen Querschnitts ändert sich aber die maximale radiale Erstreckung D_{HA} zwischen einer größten maximalen radialen Erstreckung D_{HAg} und einer kleinsten maximalen radialen Erstreckung D_{HAk}.

Die Hohlräume 24 lassen sich in einen ersten Abschnitt 26 und einen zweiten Abschnitt 28 unterteilen. In einem ersten Abschnitt 26, der von der Senkung 16 ausgeht und sich um die Länge L₁ in den Schraubdom 10₂ erstreckt, liegt die Achse der größten maximalen radialen Erstreckung D_{HAg1} der Ellipse in der Zeichnungsebende der Figur 2a), während im zweiten Abschnitt 28, der sich dem ersten Abschnitt 26 anschließt und den restlichen Schraubdom 10₂ mit der Länge L₂ durchdringt, die Achse der kleinsten maximalen radialen Erstreckung D_{HAk2} in der Zeichnungsebene der Figur 2a) liegt. Insofern sind die beiden Ellipsen um 90° zueinander gedreht. Im zweiten Ausführungsbeispiel gehen die beiden Abschnitte 26, 28 abrupt ineinander über. Es ist aber genauso gut möglich, dass die Ellipse kontinuierlich entlang der Längsachse A gedreht wird, so dass der erste Abschnitt 26 allmählich in den zweiten Abschnitt 28 übergeht. Es ist ebenfalls möglich, dass die beiden Abschnitte 26, 28 beabstandet voneinander angeordnet sind, so dass der Schraubdom 10₂ einen Abschnitt ohne Hohlräume 24 aufweist.

Um den Schraubdom 10₂ im Spritzgussverfahren fertigen zu können, muss die Bohrung 18 als Durchgangsbohrung ausgestaltet sein, um von jedem Ende der Bohrung 18 einen Dorn in den Schraubdom 10₂ einbringen zu können, da durch die um 90° gegeneinander verdrehten Ellipsen eine Hinterschneidung erzeugt wird. Mit einem 3D-Druckverfahren wäre es aber möglich, diese Ausführungsform des Schraubdoms 10₂ mit einer Sacklochbohrung zu fertigen.

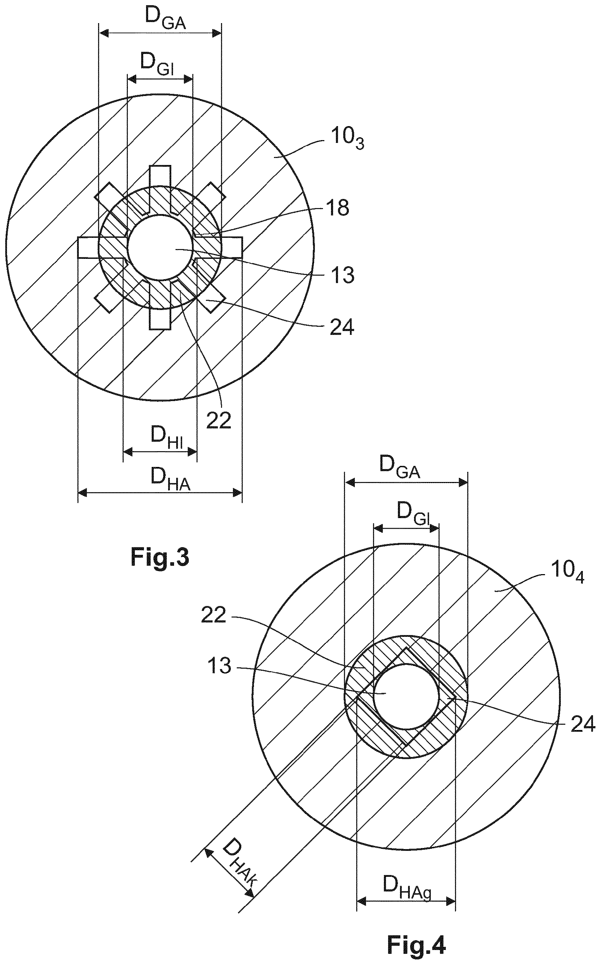

In Figur 3 ist ein drittes Ausführungsbeispiel des Schraubdoms 10₃ dargestellt, in welchem die Hohlräume 24 in etwa einen sternförmigen Querschnitt aufweisen und sich zusammenhängend von der Senkung 16 bis zum Grund der Bohrung erstrecken. Da sich die Hohlräume 24 auch in diesem Ausführungsbeispiel radial nach außen der Bohrung 18 anschließen, wird der Gewinderaum 22 segmentweise von den Hohlräumen und der Bohrung 18 durchdrungen. Folglich ist die maximale radiale Erstreckung D_{HA} der Hohlräume 24 größer als der Gewindeaußendurchmesser D_{GA}, während die minimale radiale Erstreckung D_{HI} dem Durchmesser der Bohrung 18 entspricht.

In Figur 4 ist ein viertes Ausführungsbeispiel des Schraubdoms 10₄ dargestellt, in welchem ein zusammenhängender Hohlraum 24 vorhanden ist, der einen quadratischen Querschnitt aufweist. Die größte maximale radiale Erstreckung D_{HAg} des Hohlraums 24 ist aber kleiner als der Gewindeaußendurchmesser D_{GA}, so dass der Hohlraum 24 radial nach außen vollumfänglich in den Gewinderaum 22 hineinragt, ihn aber nicht durchdringt. In diesem Fall soll die kleinste maximale radiale Erstreckung D_{HAK} größer sein als der Durchmesser der Bohrung 18, weshalb die Bohrung 18 nicht mehr vorhanden ist. Wiederum beträgt die minimale radiale Erstreckung D_{HI} des Hohlraums 24 null.

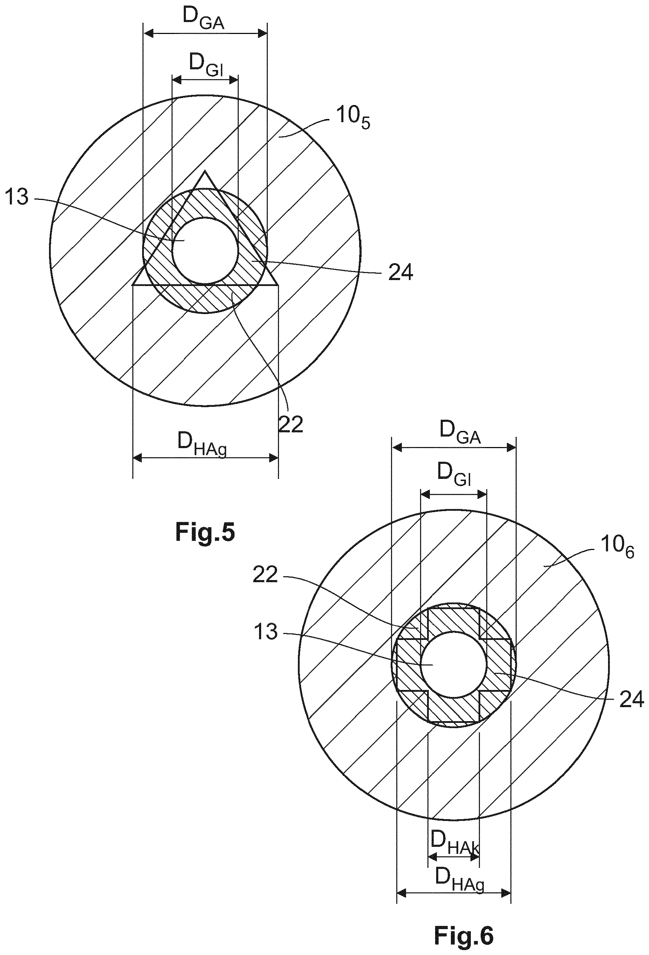

In Figur 5 ist ein fünftes Ausführungsbeispiel des Schraubdoms 10₅ dargestellt, in welchem ein zusammenhängender Hohlraum 24 vorhanden ist, der einen dreieckigen Querschnitt aufweist. Die größte maximale radiale Erstreckung D_{HAg} des Hohlraums 24 ist größer als der Gewindeaußendurchmesser D_{GA}, so dass der Hohlraum 24 den Gewinderaum 22 segmentweise durchdringt. In diesem Fall soll auch die kleinste maximale radiale Erstreckung D_{HAK} (nicht gezeigt) größer sein als der Durchmesser der Bohrung 18, weshalb die Bohrung 18 nicht mehr vorhanden ist.

In Figur 6 ist ein sechstes Ausführungsbeispiel des Schraubdoms 10₆ dargestellt, in welchem ein zusammenhängender Hohlraum 24 vorhanden ist, der einen kreuzförmigen Querschnitt aufweist. Die größte maximale radiale Erstreckung D_{HAg} des Hohlraums 24 ist aber kleiner als der Gewindeaußendurchmesser D_{GA}, so dass der Hohlraum 24 radial nach außen vollumfänglich in den Gewinderaum 22 hineinragt, ihn aber nicht durchdringt. In diesem Fall soll auch die kleinste maximale radiale Erstreckung D_{HAK} größer sein als der Durchmesser der Bohrung 18, weshalb die Bohrung 18 nicht mehr vorhanden ist, so dass die minimale radiale Erstreckung D_{HI} null beträgt.

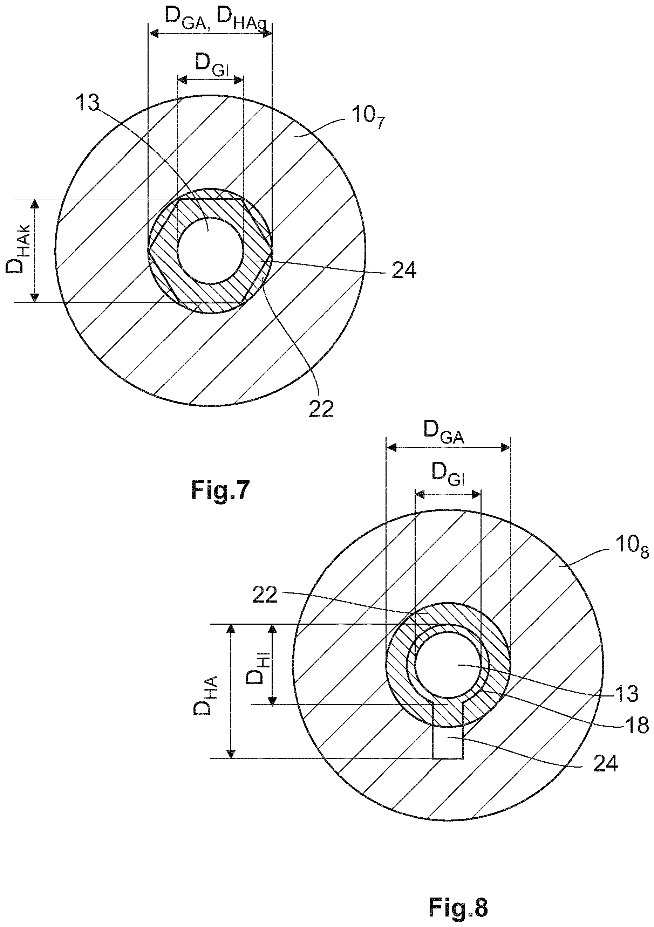

In Figur 7 ist ein siebtes Ausführungsbeispiel des Schraubdoms 10₇ dargestellt, in welchem ein zusammenhängender Hohlraum 24 vorhanden ist, der einen polygonen Querschnitt, hier einen sechseckigen Querschnitt, aufweist. Die größte maximale radiale Erstreckung D_{HAg} des Hohlraums 24 entspricht dem Gewindeau-ßendurchmesser D_{GA}, so dass der Hohlraum 24 radial nach außen vollumfänglich in den Gewinderaum 22 hineinragt, ihn aber nicht durchdringt. In diesem Fall soll auch die kleinste maximale radiale Erstreckung D_{HAK} größer sein als der Durchmesser der Bohrung 18, weshalb die Bohrung 18 nicht mehr vorhanden ist und die minimale radiale Erstreckung D_{HI} null beträgt.

In Figur 8 ist ein achtes Ausführungsbeispiel des Schraubdoms 10₈ dargestellt, in welchem ein zusammenhängender Hohlraum 24 vorhanden ist, der einen kreisförmigen Querschnitt mit einem radialen Vorsprung aufweist. Der kreisförmige Querschnitt wird von der Bohrung 18 gebildet. Die maximale radiale Erstreckung D_{HA} ist größer als der Gewindeaußendurchmesser D_{GA}, so dass der Hohlraum 24 zusammen mit der Bohrung 18 den Gewinderaum 22 segmentweise durchdringt. Die minimale radiale Erstreckung D_{HI} entspricht dem Durchmesser der Bohrung 18.

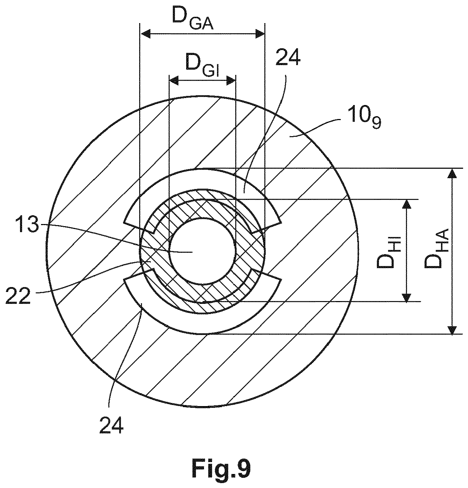

In Figur 9 ist ein neuntes Ausführungsbeispiel des Schraubdoms 10₉ dargestellt, in welchem zwei voneinander getrennte Hohlräume 24 vorhanden sind, die einen C-förmigen Querschnitt aufweisen. In diesem Ausführungsbeispiel ist die minimale radiale Erstreckung D_{HI} geringer als der Gewindeaußendurchmesser D_{GA}. Folglich kann beim Anziehen der Schraube 13 Material in den Hohlraum 24 eingebracht werden.

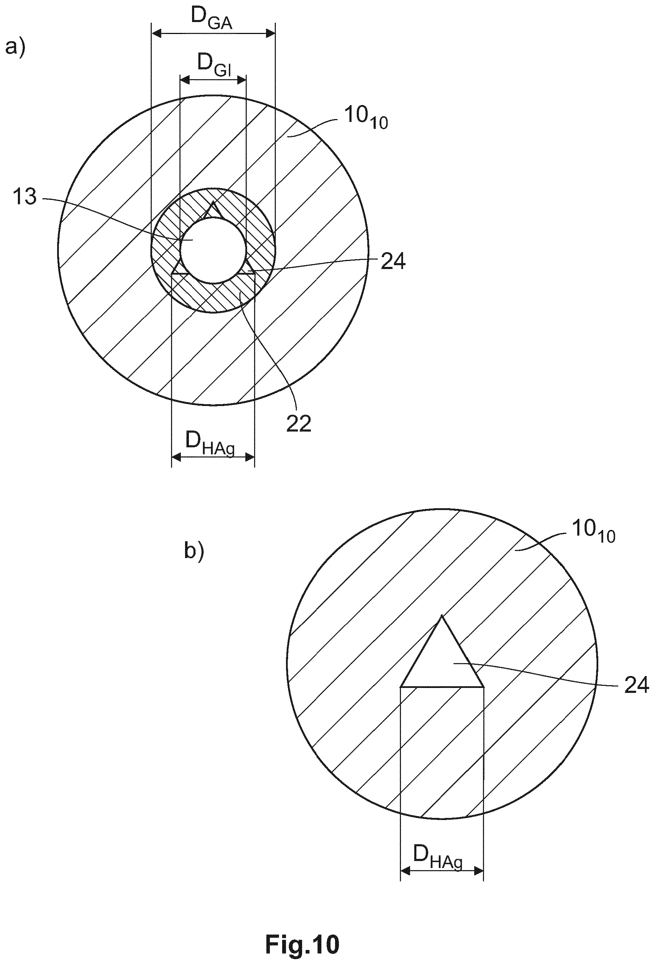

In Figur 10a) ist ein zehntes Ausführungsbeispiel des Schraubdoms 10₁₀ dargestellt, welches dem fünften Ausführungsbeispiel 10₅ (vgl. Figur 5) sehr nahe kommt. In Figur 10b) ist das zehnte Ausführungsbeispiel des Schraubdoms 10₁₀ ohne die eingeschraubte Schraube 13 dargestellt. Wie auch im fünften Ausführungsbeispiel 10₅ weist der Hohlraum 24 einen dreieckigen Querschnitt auf. Im Gegensatz zum fünften Ausführungsbeispiel 10₅ ist jedoch die größte maximale radiale Erstreckung D_{HAg} des Hohlraums 24 kleiner als der Gewindeaußendurchmesser D_{GA}. Zudem ist die hier nicht dargestellte kleinste maximale radiale Erstreckung D_{HAk}, die von einem eingeschriebenen Kreis definiert wird, dessen Mittelpunkt auf Schnittpunkt der Winkelhalbierenden liegt und dessen Radius sich vom Mittelpunkt bis zu den Seiten des dreieckigen Querschnitts erstreckt, kleiner als der Gewindeinnendurchmesser D_{GI} bzw. der Kerndurchmesser der Schraube 13. Folglich befindet sich der Gewinderaum 22 im eingeschraubten Zustand zumindest abschnittsweise außerhalb des Hohlraums 24. Um dennoch zu gewährleisten, dass Material im Hohlraum 24 abgelegt werden kann, ist die maximale radiale Erstreckung D_{HAg} größer als der Gewindeinnendurchmesser D_{GI}. In den Abschnitten, in denen sich der Gewindeinnendurchmesser D_{GI} bzw. der Kerndurchmesser der Schraube 13 radial nach außen über den Hohlraum 24 erstreckt, kann je nach Wahl der betreffenden Abmessungen des Hohlraums 24 und der Schraube sowie des Materials des Schraubdoms 10₁₀ ein lokales Fließen insbesondere des Kunststoffs erzeugt werden, wodurch eine sehr feste Verbindung geschaffen werden kann. Dennoch wird das Anzugsdrehmoment mit den Abschnitten des Hohlraums, die größer sind als der Gewindeinnendurchmesser DGI bzw. der Kerndurchmesser der Schraube 13, soweit begrenzt, dass das Aufplatzen des Schraubdoms 10₁₀ sicher verhindert wird. Der in den Figuren 10a) und 10b) gezeigte dreieckige Querschnitt ist zum Realisieren des lokalen Fließens besonders gut geeignet, da der Gewindekern an nur drei Abschnitten mit dem Schraubdom in Berührung kommt und somit eine hohe Flächenpressung erreicht werden kann, was das lokale Fließen begünstigt. Zwar kann der Hohlraum 24 auch einen rechteckigen Querschnitt aufweisen, der so bemessen ist, dass der Gewindekern nur an zwei Abschnitten mit dem Schraubdom in Berührung kommt, jedoch wird in diesem Fall die Schraube nicht so präzise geführt wie bei einem dreieckigen Querschnitt, so dass die über den Schraubdom zu verbindenden Bauteile weniger exakt positioniert werden können.

### Bezugszeichenliste

- 10, 10₁ - 10₁₀: Schraubdom
- 12: Bauteil
- 13: Schraube
- 14: Öffnung
- 16: Senkung
- 18: Bohrung
- 20: Bund
- 22: Gewinderaum
- 24: Hohlraum
- 26: erster Abschnitt
- 28: zweiter Abschnitt

- A: Längsachse
- D_{GA}: Gewindeaußendurchmesser
- D_{GI}: Gewindeinnendurchmesser, Kerndurchmesser
- D_{HA}: maximale radiale Erstreckung
- D_{HAg}: größte maximale radiale Erstreckung
- D_{HAK}: kleinste maximale radiale Erstreckung
- D_{HI}: minimale radiale Erstreckung
- D_{S}: Durchmesser Senkung
- D_{T}: Gesamtdurchmesser
- L_{S}: Länge Senkung
- L_{T}: Gesamtlänge

## Patentansprüche

1. Schraubdom zum Befestigen eines Bauteils (12), wobei der Schraubdom (10) ganz oder teilweise aus einem elastisch oder plastisch verformbaren Material besteht und der Schraubdom (10) eine Längsachse (A) und eine Bohrung (18) aufweist, entlang welcher eine Schraube (13) mit einem selbstschneidenden oder selbstfurchenden Gewinde in den Schraubdom (10) einschraubbar ist,
wobei der Schraubdom (10) mehrere Hohlräume (24) umfasst, die sich radial nach außen an die Bohrung (18) anschließen und radial zur Längsachse (A) nach außen geschlossen sind,
**dadurch gekennzeichnet, dass**
die Hohlräume (24) eine Anzahl von Querschnitten aufweisen, die entlang der Längsachse (A) abrupt oder allmählich ineinander übergehen oder beabstandet voneinander angeordnet sind, und
dass die Hohlräume (24) bezogen auf eine senkrecht zur Längsachse (A) verlaufende Ebene einen elliptischen Querschnitt aufweisen.

## Claims

1. Screw boss for fixing a component (12), wherein the screw boss (10) is entirely or partially composed of an elastically or plastically deformable material and wherein the screw boss (10) comprises a longitudinal axis (A) and a bore hole (18), into which a screw (13) having a self-tapping or self-furrowing thread can be screwed,
wherein the screw boss (10) encompasses numerous hollow spaces (24) which join the bore hole (18) radially outwards and which are outwardly closed radially to the longitudinal axis (A),
**characterized in that**
the hollow spaces (24) comprise numerous cross-sections which abruptly or gradually merge into each other along the longitudinal axis (A) or which are arranged at a distance to each other, and
**in that** the hollow spaces (24) comprise, relative to a plane extending vertically to the longitudinal axis (A), an elliptic cross-section.

## Revendications

1. Bossage de vis pour fixer une pièce (12),
dans lequel
- le bossage de vis (10) est en totalité ou en partie réalisé en une matière élastique ou plastiquement déformable et le bossage de vis (10) a un axe longitudinal (A) et un perçage (18) le long duquel se visse une vis (13) ayant un filet auto-taraudant ou auto-traçant dans le bossage de vis (10),
- le bossage de vis (10) a plusieurs cavités (24) qui se raccordent radialement vers l'extérieur du perçage (18) et qui sont fermées par rapport à l'extérieur, radialement par rapport à l'axe longitudinal (A),
bossage **caractérisé en ce que**
- les cavités (24) ont un certain nombre de découpes transversales qui se rejoignent selon l'axe longitudinal (A), de façon discontinue ou de façon continue ou sont écartées les unes des autres, et
- les cavités (24) ont un plan de section elliptique par rapport à une perpendiculaire à l'axe longitudinal (A).
